# EUROPEAN PATENT SPECIFICATION

(11) **EP 3 746 325 B1**
(45) Date of publication and mention of the grant of the patent: **21.06.2023**
(21) Application number: 19704557.8
(22) Date of filing: 30.01.2019
(51) Int. Cl.: B60K 13/04, B60K 15/035, B60K 15/04, F01N 3/20, B60K 15/03

(54) **IMPROVED FILLER HEAD**
VERBESSERTER BEFÜLLERKOPF
TÊTE DE REMPLISSAGE AMÉLIORÉE

(30) Priority: 31.01.2018 EP 18154504
(43) Date of publication of application: 09.12.2020
(73) Proprietor: Plastic Omnium Advanced Innovation And Research, 1130 Bruxelles (BE)
(72) Inventor: WATANABE, Akiko, TOKYO (JP)
(74) Representative: LLR
(86) International application number: PCT/EP2019/052242
(87) International publication number: WO 2019/149750

(56) References cited:
- EP-A1- 2 927 040
- US-A1- 2010 200 115
- US-A1- 2014 190 981

## Description

### FIELD OF THE INVENTION

The invention relates to an improved filler head and in particular an optimized filler head configured to improve refilling of a fluid tank such as an urea tank.

### BACKGROUND OF THE INVENTION

Legislation on vehicle and truck emissions stipulates, amongst other things, a reduction in the release of nitrogen oxides NOₓ into the atmosphere. One known way to achieve this objective is to use the "SCR" (shortening from terms "Selective Catalytic Reduction") process which enables the reduction of nitrogen oxides by injection of a reducing agent, such as ammonia, into the exhaust line. Generally, a SCR system comprises a tank for the storage of an aqueous additive, such as a urea solution, a pump for conveying the aqueous additive in the feed line, and a device for metering the desired amount of aqueous additive and injecting it into the exhaust line. The aqueous additive is thus accurately metered and injected into the exhaust gas stream where it is hydrolysed before converting the nitrogen oxide (NOₓ) to nitrogen (N₂) and water (H₂O).

The distribution of urea solution, sometimes called adblue^{®}, is known for trucks for many years. Nowadays, passenger vehicle is also concerned when including a diesel powertrain. The urea distribution nozzle has a smaller diameter than those of fuel as a mistake-proofing device. However, the urea distribution nozzle can be introduced in a fuel filler head. Thus, valves for distribution nozzles that are activated by a magnetic field have been developed. Each urea filler head must consequently have a magnetic element for activating the valve and allowing the delivery of urea as disclosed for example in document EP2927040.

The magnetic field is generally induced by a permanent magnet that is press fitted along the guiding element protruding from the filler head. However, it has been observed that magnet was sometimes wrongly mounted (inversed polarity) so that the delivery of urea is not possible. Moreover, after times, cracks may appear in filler head so that the tightness of the storage system is no longer guaranteed.

### SUMMARY OF THE INVENTION

The invention aims to provide a new filler head of a urea tank that is more resistant so as to maintain the tightness of the storage system and that guarantee the right polarity direction of the magnetic field.

Hence, the invention relates to a filler head for a storage system comprising a body with a main part closed by a cover part, and being configured to receive a distribution nozzle of a fluid including a magnetic opening valve and configured to be connected, in a tighten manner, to a filling line and a venting line of a fluid tank, the filler head further comprising a cavity in which a separating device is received between the main part and the cover part so as to improve the partitioning of the flow of air coming from the venting line and the flow of fluid going to the filling line during refilling, and a magnetic element permitting the activation of the magnetic opening valve of the distribution nozzle, **characterised in that** the separating device further comprises a venting element including at least one hole that allows the flow of air coming from the venting line to pass through a body of the separating device in order to be expelled outside the filler head, and a supporting element for receiving the magnetic element allowing each of the separating device and the cover part to act as a positioning element of the magnetic element.

Advantageously, the invention avoids cracks in the filler head due to variations of temperature. Indeed, even if the filler head is mounted near a powertrain, the difference of coefficient of expansion between the magnetic element and the guiding element is not important anymore because the magnetic element is mounted in a part inside the body of the filler head. The body of the filler head and the magnetic element can each expand/shrink in an independent manner. Moreover, the magnetic element does not have to be press fitted in any part permitting to facilitate the manufacture of the filler head.

The invention may also include one or more of the following optional features, taken alone or in combination.

The magnetic element can be mounted in the supporting element according to a clearance fit so as to compensate for any difference of coefficient of expansion between the magnetic element, the separating device and the body of the filler head. This embodiment avoids advantageously any cracks in the filler head due to shrinkage/expansion induces by variations of temperature. This also allows to use another kind of magnetic element, *i.e.* different from a permanent magnet, to generate the magnetic field such an electromagnetic coil.

The supporting element can comprise at least one rib protruding from its internal wall that each cooperates with a corresponding blind groove in the external surface of the magnetic element so as to ensure the correct orientation of the latter.

Preferably, each bling groove may extend only partially along the axial thickness of the magnetic element so as to have an opening of the blind groove only on one side of the magnetic element. This arrangement forms a mistake-proof element for guaranteeing the right orientation of the magnetic element. Alternatively, the blind groove may extend along the entire axial thickness of the magnetic element so as to guide the latter according to two opposite orientations.

The separating device can further comprise a shielding element including at least one partial flange and/or at least one transversal rib protruding from the external surface of a body of the separating device. Advantageously, each partial flange mainly clogs the axial passage of urea solution coming from the filling line and/or the transversal ribs mainly restrain the radial passage of urea solution coming from the venting line (passing through the apertures between the cavity and the buffer volume).

In a preferred manner, the shielding element may at least partially surround the hole of the venting element in order to allow only the passage of air through the hole. This embodiment allows any urea solution coming from either the venting line, or the filling line, to be blocked in the cavity so as to return into the tank mainly by the filling line.

The separating device can further comprise a securing element including at least one mortise mounted onto the external surface of a body of the separating device that each cooperates with a corresponding tenon protruding from the internal wall of the cavity. This embodiment permits to mount/remove easily the separating device from the cavity of the filler head when the cover part is removed. This allows notably to keep substantially the same filler head whatever the market, the separating device being the main component to be adapted to the market.

The cover part can be a substantially planar part so as to position the buffer volume at the same level/plane than the one of the remaining part of the main part of the filler head.

The cover part can comprise a protruding guiding element permitting to receive the distribution nozzle. Thus, during refilling, the end of the distribution nozzle is substantially levelled (co-planar) with the buffer volume permitting improving of performance of the latter. Moreover, it permits to limit the number of parts of the filler head.

The protruding guiding element may be closed in a tighten manner by a cap. Thus, fluid can't be projected outside the filler head. The cap can be removed for refilling the tank with fluid.

In a first example, the cover part can be secured to the main in a tighten manner by welding. Thus, a unique welding is used during the manufacturing process allowing the improvement of cycle time and associated costs.

In a second example, the cover part can be secured to the main part in a tighten manner by snap-fitting a sealing ring between the cover part and the main part. Thus, the manufacturing process can avoid the use of welding step allowing an easier process.

Finally, the invention also relates to a storage system comprising a fluid tank connected to a filler line configured to guide the gravitational flow of fluid from a filler head to the tank and a venting line configured to compensate de pressure variations in the tank, **characterised in that** the storage system further comprises the filler head as explained above.

### BRIEF DESCRIPTION OF THE DRAWINGS

Other features and advantages of the present invention will appear more clearly upon reading the following detailed description, made with reference to the annexed drawings, provided as a non-limited description, in with:
- Figure 1 is a top schematic view of a vehicle in which the present invention may be applied;
- Figure 2 is a perspective view of a filler head according to the invention;
- Figure 3 is a cross-sectional view along the plane III-III of Figure 2;
- Figure 4 is partial view of Figure 3;
- Figure 5 is an exploded view of a filler head according to the invention.

### DETAILED DESCRIPTION OF THE PREFERRED EMBODIMENTS

in the various figures, the same or similar elements bear the same references, optionally added with an index. The description of their structure and their function is therefore not systematically restated.

The expression "SCR system" is understood to mean a system for the catalytic reduction of the NOx from the exhaust gases of an internal combustion engine, preferably of a vehicle, using for example an aqueous urea solution as liquid additive. The present invention is advantageously applied to diesel engines, and in particular to the diesel engines of passenger cars, trucks or heavy vehicles.

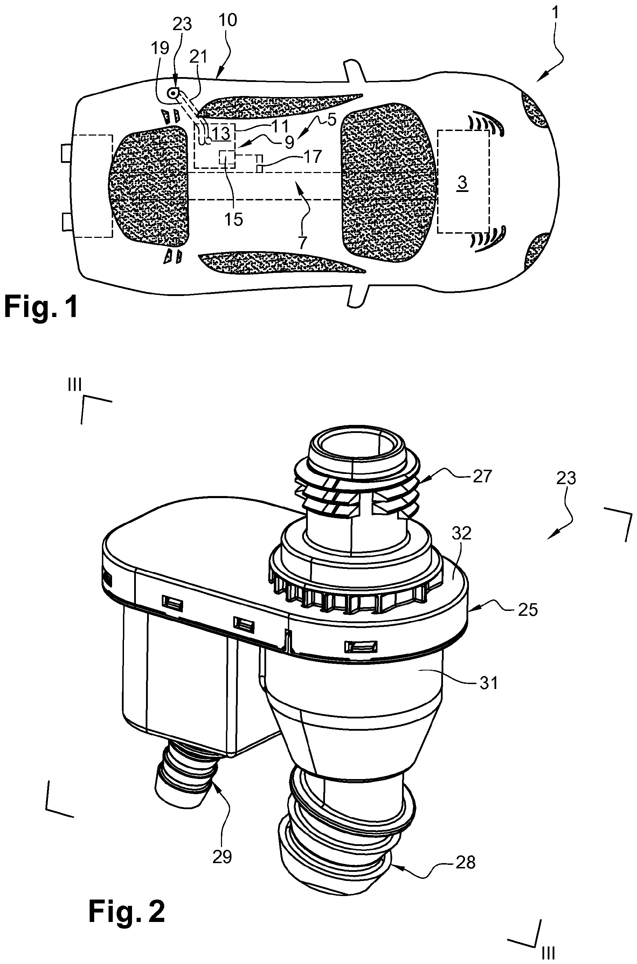

As illustrated in figure 1, the invention relates to a vehicle 1 equipped with a powertrain 3 connected to a depollution system 5. More precisely, the depollution system 5 comprises an exhaust device 7 and an additive injection device 9 in the exhaust device 7 as, for example, a urea solution.

The injection device 9 comprises a storage system 10 including a tank 11 for storing a urea solution 13. The injection device 9 may also include, or not, a plurality of immersed sensors in the urea solution 13 such as a level sensor, a temperature sensor and/or a quality sensor which can be of a capacitive effect, of the ultrasound type or of the mechanical type.

The injection device 9 also comprises a pump 15 associated with an injection element 17 which are managed by a processing unit connected to the central computer of the vehicle 1. The processing unit contains a memory in which coded instructions are stored. When coded instructions are executed by the processing unit, the steps, for example, of an SCR process are carried out.

The tank 11 must be regularly refilled with a urea solution 13 (other additive solution is possible such as an ammonia solution). The storage system 10 thus comprises a filling line 19, a venting line 21 (also called return line) and a filler head 23. The filling line 19 is configured to guide the gravitational flow of fluid from the filler head to the tank 11. The venting line 21 is configured to compensate de pressure variations in the tank 11 during refilling period by expelling, from the filler head, the air contained in the tank 11 that is compressed by the arrival of fluid in the tank 11.

Finally, the filler head 23 is configured to receive the nozzle (not shown) of fluid distribution system. Moreover, the filler head 23 is configured to be connected, in a tighten manner, to the filling line 19 and the venting line 21. The filler head 23 thus allows, during refilling period, the fluid 13 to flow into the tank 11 and, at the same time, allows the air expelled from the tank 11 to escape into the ambient air (external atmosphere) around the vehicle 1.

The invention aims to provide a new filler head of a urea tank that is more resistant so as to maintain the tightness of the storage system and guarantees the right polarity direction of the magnetic field. Indeed, inventor has observed that press fitting of the magnet in the guiding element incurs several problems. Thus, the magnet is sometimes wrongly mounted (inversed polarity) so that the distribution valve is not activated when distribution nozzle is received in the guiding element. Moreover, after times, cracks may appear in filler head so that the tightness of the storage system is no longer guaranteed.

The inventor has discovered that cracks appear due to variations of temperature. Indeed, even if the filler head 23 is not mounted near the power train 3, the difference of coefficient of expansion between the magnet and the guiding element may incur breaks in the guiding element 27 due to severe relative shrinkage/expansion. Of course, when the filler head 23 is near the powertrain 3, the cracks occurs more often due to its high variations of temperature.

Hence, as shown in Figure 2, the invention relates to a filler head 23 for a storage system 10 permitting to obviate these problems. The filler head 23 preferably comprises a body 25 being configured to receive a distribution nozzle of a fluid and configured to be connected, in a tighten manner, to a filling line 19 and a venting line 21 of a fluid tank 11.

More precisely, a protruding guiding element 27 permits, along its internal diameter, to receive a distribution nozzle (not shown) so as a fluid such as a urea solution 13, can flow through the filler head 23. The protruding guiding element 27 is also used as a mistake-proofing device to prevent any introduction of a fuel distribution nozzle. This is achieved by the guiding element 27 having a smaller section than the fuel nozzle. Moreover, first and second outlets 28, 29 are configured to be connected, in a tighten manner, respectively to the filling line 19 and the venting line 21 of the fluid tank 11.

As it can be seen in Figure 2, the body 25 comprises a main part 31 closed by a cover part 32. Thus, the first and second outlets 28, 29 are included, preferably in a single piece or as an integral part of, with the main part 31 and, the protruding guiding element 27, with the cover part 32. The main part 31 and the cover part 32 can be made of nylon or another kind of polymer.

The filler head 23 further comprises preferably a buffer volume 33 so as to reduce the speed of flow V coming from the venting line 21, *i.e.* from the second outlet 29. The buffer volume 33 also aims to burst the air bubbles along the wall thereof in order to prevent any fluid projection from the filler head 23 during refilling period.

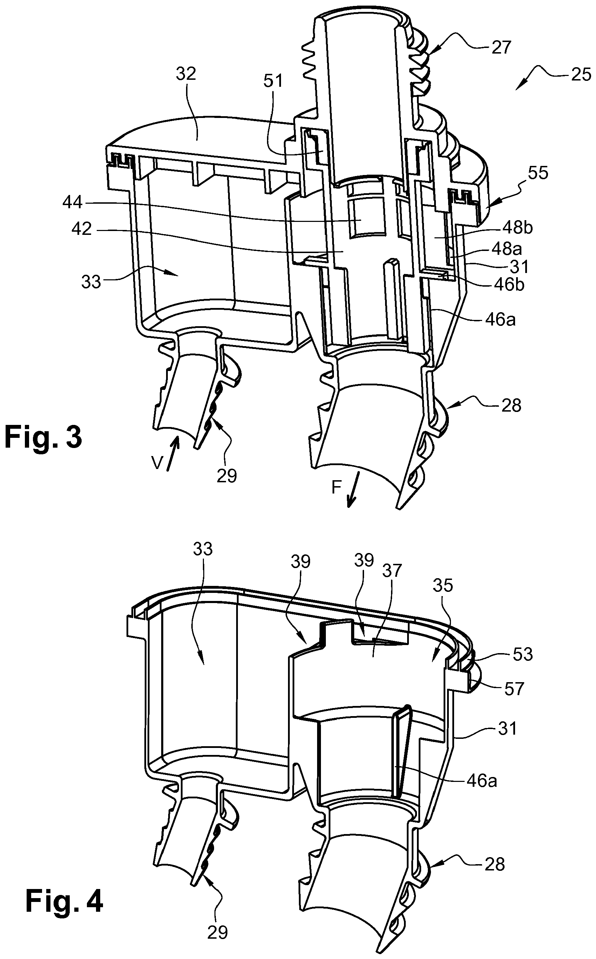

Preferably, the buffer volume 33 is in one-piece with the main part 31 as shown in Figure 4. Moreover, the buffer volume 33 is closed by the cover part 32 so as to improve its performance. Indeed, the buffer volume 33 can thus be positioned as far as possible from the fluid tank 11. This is an advantage compared to known buffer volume that is implemented in the venting line or between the tank and the venting line. However, in present invention, the known buffer volumes can also be used.

Thus, this preferred embodiment allows a better reduction of the speed of flow V coming from the venting line 21 and also a better bursting of the air bubbles coming from the venting line 21 along the wall of the buffer volume 33 regardless the volume of the tank 11 and/or the filling rate of the distribution nozzle (not shown). The buffer volume 33, that contains preferably at least 100 ml, can also be thus more simply implemented.

Moreover, the unique closure with the cover part 32 allows to simplify the shape and form of the filler head 23 which is consequently easier to manufacture. Finally, this allows to produce a limited number of parts permitting to improve cycle time and associated costs.

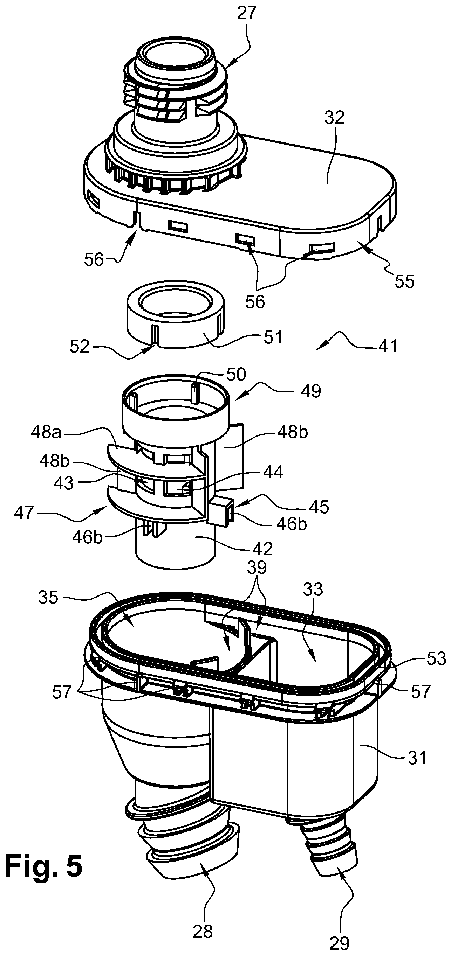

As it can be seen from Figure 5, the cover part 32 is a substantially planar part so as to position the buffer volume 33 at the same level or plane than the one of the remaining part, such as the cavity 35 as explained below, of the main part 31 of the filler head 23. The terms "substantially planar" mean that the cover part 32 is a part in three dimensions, one of the dimensions (called thickness) being limited, *i.e.* small regarding the two other dimensions. The thickness of the cover part 32 thus does not substantially form any hollow that would significantly extend the buffer volume 33 (and the cavity 35 as explained below). Typically, the thickness of cover part 32 is less than 10% of the width of the cover part 32, around 10% of the highness of the protruding guiding element 27 and less than 5% of the length of the cover part 32. In a non-limiting manner, the thickness of cover part 32 may be comprised between 3 and 7 mm in case of a welded assembly (see first example below), and between 7 and 15 mm in case of a snap-fitted assembly (see second example below). Moreover, the walls of the cover part 32 are preferably formed with a material thickness comprised between 1 and 3 mm. This notably allows, during refilling period, the end of the distribution nozzle (not shown) to be substantially levelled (co-planar) with the buffer volume 33 permitting improving of performance of the latter.

The protruding guiding element 27 can be closed in a tighten manner by a cap (not shown) notably by snap-fitting of by screwing (as shown in Figure 5). Thus, fluid such as a urea solution 13 coming from the venting line 21 cannot be projected outside the filler head 23. The cap (not shown) can be removed in order to refill the tank 11 with fluid.

As it can be seen in Figures 3 to 5, the body 25 comprises a cavity 35 integrated in the main part 31 in which the fluid is guided to the filling line 19 via the first outlet 28. The cavity 35 may have an enlarged section regarding the one of the filling line 19 and/or of the first outlet 28 so as to avoid the activation of the stop function of the distribution nozzle until the tank 11 is effectively full.

The cavity 35 is separated from the buffer volume 33 by a common wall 37 so as to optimize the size of the filler head 23 and to limit the number of parts of the filler head 23. It is notably apparent that the height of the filler head 23 is limited compared to the capacity of the buffer volume 33 permitting an easier implementation in the vehicle. As shown in Figures 4 and 5, at least one aperture 39 is included in the common wall 37 allowing the buffer volume 33 to communicate with the cavity 35. This implementation according to the invention allows a high degree of freedom regarding the shape and form of the main part 31. Indeed, the entirety of the top of main part 31 is completely opened, thus permitting an easier manufacture of the filler head 23.

For example, advantageously according to the invention, an edge of the apertures 39 may thus be formed by the cover part 32, *i.e.* the common wall 37 may be simply cut out and the apertures 39 may be partially framed by or be defined by or be a part of a surface of the cover part 32.

It also becomes easier to mount inserts within the main part 31 and then to secure it on the body 25 by closing it with the cover part 32. A separating device 41 is thus mounted in the cavity 35 of the body 25 between the main part 31 and the cover part 32 so as to improve the partitioning of the flow V of air coming from the venting line 21 and the flow F of fluid going to the filling line 19 during refilling period.

The separating device 41 is preferably removable so as to be replaceable. The separating device 41 can thus be replaced with a different geometry to fit another kind or dimensions of nozzle and/or tank. This allows notably to keep substantially the same filler head (at least the same main part 31 and, eventually, the same cover part 32) whatever the market, the separating device 41 being the main component to be adapted to the market specifications (the protruding guiding element 27 may eventually also have to be adapted).

The separating device 41 can comprise a body 42 onto which at least one element may be mounted. In the example of Figures 3 and 5, a venting element 43, a securing element 45, a shielding element 47 and a supporting element 49 are represented. The venting element 43 comprises at least one hole 44 that allows the flow V of air coming from the venting line 21 to pass through the body 42 in order to be expelled via the protruding guiding element 27 in the external atmosphere, *i.e.* outside the storage system 10. In the example of Figures 3 and 5, the venting element 43 comprises eight holes 44. Of course, the geometry and/or the number of holes 44 can vary without losing the advantage of the invention.

The securing element 45 allows the mounting of the body 42 in the cavity 35. It can thus comprise at least one fixing element such as a tenon - mortise assembly, a dovetail assembly, adhesive material, etc. In the example of Figures 3 to 5, the securing element 45 comprises four tenons 46a protruding from the internal wall of the cavity 35 that each cooperates with a corresponding mortise 46b mounted onto the external surface of the body 42. Thus, by relative translation between the main part 31 and the separating device 41, each tenon 46a slides and abuts against each corresponding mortise 46b so as to secure the body 42 in the cavity 35.

The shielding element 47 avoids any liquid in the flow V of air coming from the venting line 21 and the flow F of fluid going to the filling line 19 to be expelled from the filler head 23 notably during refilling period. It can thus comprise at least one wall such as a rib, a flange, etc. In the example of Figures 3 and 5, the shielding element 47 comprises four partial flanges 48a (substantially horizontal in Figure 5) and four transversal ribs 48b (substantially vertical in Figure 5), each protruding from the external surface of the body 42. As it can be seen in Figures 3 and 5, the shielding element 47 at least partially or totally surrounds the holes 44 of the venting element 43 in order to limit the passage of any liquid from the flows V and/or F, *i.e.* to allow only passage of air through the holes 44.

More specifically, the shielding element 47 aims the flow V of air coming from the venting line 21 to be expelled from the filler head 23 without any embedded urea solution. Thus, the shielding element 47 avoids any urea solution coming from either the venting line 21, or the filling line 19, to come into contact with the end of the distribution nozzle during refilling period or more generally with the protruding guiding element 27. Indeed, the partial flanges 48a (substantially horizontal in Figure 5) mainly clogs the axial passage of urea solution coming from the filling line 19 whereas the transversal ribs 48b (substantially vertical in Figure 5) mainly restrain the radial passage of urea solution coming from the venting line 21 (passing through the apertures 39). Consequently, the shielding element 47 allows any urea solution coming from either the venting line 21, or the filling line 19, to be blocked in the cavity 35 so as to return into the tank 11 mainly by the filling line 19.

The urea distribution nozzle (not shown) can be introduced in a fuel filler head. Thus, valves (not shown) for distribution nozzles that are activated by a magnetic field have been developed. Each urea tank 11 must consequently have a magnetic element for activating the valve and allowing the delivery of urea solution 13. The magnetic field is generally induced by a permanent magnet that is press fitted inside the protruding guiding element 27. However, the difference of coefficient of expansion between the magnet and the protruding guiding element 27 can lead to breaks in the protruding guiding element 27 due to severe relative shrinkage/expansion notably when the filler head 23 is near the powertrain 3 occurring high variations of temperature.

Advantageously, the separating device 41 further comprises a supporting element 49 according to the invention that can receive a magnetic element 51 such as a permanent magnet. The supporting element 49 permits activation of the magnetic opening valve in the distribution nozzle when the latter is introduced in the protruding guiding element 27. Moreover, the magnetic element 51 is mounted in the supporting element 49 according to a clearance fit so as to compensate for any difference of coefficient of expansion between the magnetic element 51, the separating device 41 and the body 25 of the filler head 23. This also allows to use another kind of magnetic element 51, *i.e.* different from a permanent magnet, to generate the magnetic field such an electromagnetic coil. Moreover, this permits each of the separation device 49 and the cover part 32 to act as a positioning element of the magnetic element 51.

Preferably, the supporting element 49 also comprises a mistake-proofing device to prevent a bad orientation of the magnetic field generated by the magnetic element 51. Thus, the magnetic element 51 and the annular wall (substantially vertical in Figure 5) of the supporting element 49 can cooperate with a tenon - mortise assembly, a dovetail assembly, etc. In the example of Figures 3 and 5, the supporting element 49 comprises four ribs 50 protruding from the internal surface of its annular wall that each cooperates with a corresponding blind groove 52 in the external surface of the magnetic element 51. As shown in Figure 5, the bling groove 52 do not extent along the entire axial thickness (substantially vertical in Figure 5) of the magnetic element 51 so as to ensure its correct orientation (in opposite position, there is no opening groove 52).

Thus, by relative translation between the magnetic element 51 and the separating device 41, each rib 50 slides and abuts against the bottom (end of the groove 52 along the axial thickness of the magnetic element 51) of each corresponding groove 52 so as to guarantee the correct orientation of the magnetic element 51 in the supporting element 49. Moreover, according to the clearance fit between the magnetic element 51 and the supporting element 49, severe relative shrinkage/expansion of these elements 49, 51 won't break them even if the filler head 23 is mounted near the powertrain 3 occurring high variations of temperature.

Of course, alternatively, the blind groove 52 could extend along the entire thickness of the magnetic element 51 so as to guide the latter according to two opposite orientations without departing from the invention.

After being mounted within the main part 31, the separating device 41 is then secured to the body 25 by closing it with the cover part 32. Advantageously according to the invention, the magnetic element 51 does not have to be press fitted inside the protruding guiding element 27 anymore. According to a first example, the cover part 32 is secured to the main part 31 in a tighten manner by welding. Thus, a unique welding is used during the manufacturing process allowing the improvement of cycle time and associated costs.

According to a second example, the cover part 32 is secured to the main part 31 in a tighten manner by snap-fitting a sealing ring 53 between the cover part 32 and the main part 31. Thus, the manufacturing process can avoid the use of welding step allowing easier processing. In the example of Figures 3 and 5, the snap-fitting can be carried out by a peripheral skirt 55 integrated to the cover part 32 and comprising through holes 56. The skirt 55 is configured to be elastically displaceable radially under stress. Thus, the holes 56 can each cooperate with a protruding stud 57 integrated on the external surface of the main part 31. Thus, by closing the main part 31 with the cover part 32, the shirt 55 is radially elastically pushed by abutting against the studs 57 until the holes 56 face the studs 57 so as to be snap-fitted.

Preferably, the sealing ring 53 is made of an elastomeric material. In the example of Figures 4 and 5, the sealing ring 53 has a U-shape section. It is either moulded over the top edge of the main part 31 or simply put on the top edge before snap-fitting.

Of course, the present invention is not limited to the embodiments and variants presented but may be subjected to various modifications within the scope of the appended claims, which will be apparent to those skilled in the art. It is in particular possible to further optimise the geometry of the body 42 regarding the application and/or the location of the filler head 23 in the vehicle. Thus, the filler head 23 is not limited to the refilling of a urea tank. It may also be applicable to a water tank or a fuel tank for example.

## Claims

1. Filler head (23) for a storage system (10) comprising a body (25) with a main part (31) closed by a cover part (32), and being configured to receive a distribution nozzle of a fluid including a magnetic opening valve, and configured to be connected, in a tighten manner, to a filling line (19) and a venting line (21) of a fluid tank (11), the filler head (23) further comprising a cavity (35) in which a separating device (41) is received between the main part (31) and the cover part (32) so as to improve the partitioning of the flow (V) of air coming from the venting line (21) and the flow (F) of fluid going to the filling line (19) during refilling, and a magnetic element (51) permitting the activation of the magnetic opening valve of the distribution nozzle, **characterised in that** the separating device (41) further comprises a venting element (43) including at least one hole (44) that allows the flow (V) of air coming from the venting line (21) to pass through a body (42) of the separating device (41) in order to be expelled outside the filler head (23), and a supporting element (49) for receiving the magnetic element (51) allowing each of the separating device (41) and the cover part (32) to act as a positioning element of the magnetic element (51).

2. Filler head (23) according to the preceding claim, in which the magnetic element (51) is mounted in the supporting element (49) according to a clearance fit so as to compensate for any difference of coefficient of expansion between the magnetic element (51), the separating device (41) and the body (25) of the filler head (23).

3. Filler head (23) according to claim 1 or 2, in which the supporting element (49) comprises at least one rib (50) protruding from an internal wall of the supporting element (49) that each cooperates with a corresponding blind groove (52) in the external surface of the magnetic element (51) so as to ensure the correct orientation of the latter.

4. Filler head (23) according to the preceding claim, in which each bling groove (52) extends only partially along the axial thickness of the magnetic element (51) so as to have an opening of the blind groove (52) only on one side of the magnetic element (51).

5. Filler head (23) according to claim 3, in which the blind groove (52) extends along the entire axial thickness of the magnetic element (51) so as to guide the latter according to two opposite orientations.

6. Filler head (23) according to any one of the preceding claims, in which the separating device (41) further comprises a shielding element (47) including at least one partial flange (48a) and/or at least one transversal rib (48b) protruding from the external surface of a body (42) of the separating device (41).

7. Filler head (23) according to claim 6, in which the shielding element (47) at least partially surrounds the hole (44) of the venting element (43) in order to allow only the passage of air through the hole (44).

8. Filler head (23) according to any one of the preceding claims, in which the separating device (41) further comprises a securing element (45) including at least one mortise (46b) mounted onto the external surface of a body (42) of the separating device (41) that each cooperates with a corresponding tenon (46a) protruding from the internal wall of the cavity (35).

9. Filler head (23) according to any one of the preceding claims, in which the cover part (32) is a substantially planar part.

10. Filler head (23) according to the preceding claim, in which the cover part (32) comprises a protruding guiding element (27) permitting to receive the distribution nozzle.

11. Filler head (23) according to the preceding claim, in which the protruding guiding element (27) is closed in a tighten manner by a cap.

12. Filler head (23) according to any one of the preceding claims, in which the cover part (32) is secured to the main part (31) in a tighten manner by welding.

13. Filler head (23) according to any one of the preceding 1 to 11, in which the cover part (32) is secured to the main part (31) in a tighten manner by snap-fitting a sealing ring (53) between the cover part (32) and the main part (31).

14. Storage system (10) comprising a urea tank (11) connected to a filling line (19) configured to guide the gravitational flow of fluid from a filler head (23) to the urea tank (11) and a venting line (21) configured to compensate de pressure variations in the urea tank (11), **characterised in that** the storage system (10) further comprises the filler head (23) according to any one of the preceding claims.

## Patentansprüche

1. Füllkopf (23) für ein Lagersystem (10), aufweisend einen Körper (25) mit einem Hauptteil (31), der durch ein Abdeckteil (32) verschlossen ist, und so konfiguriert ist, dass er eine Verteilerdüse eines Fluids mit einem magnetischen Öffnungsventil aufnimmt, und zum dichten Verbinden mit einer Füllleitung (19) und einer Entlüftungsleitung (21) eines Fluidtanks (11) konfiguriert ist, der Füllkopf (23) ferner einen Hohlraum (35) umfasst, in dem eine Trenneinrichtung (41) aufgenommen zwischen dem Hauptteil (31) und dem Abdeckteil (32) ist, um die Aufteilung des aus der Entlüftungsleitung (21) kommenden Luftstroms (V) und des zur Füllleitung (19) strömenden Fluidstroms (F) beim Nachfüllen zu verbessern, und ein Magnetelement (51), das die Aktivierung des magnetischen Öffnungsventils der Verteilerdüse ermöglicht, **dadurch gekennzeichnet, dass** die Trennvorrichtung (41) ferner ein Entlüftungselement (43) umfasst, das mindestens ein Loch (44) umfasst, das den Strom (V) von Luft erlaubt, die von der kommt Entlüftungsleitung (21) durch einen Körper (42) der Trennvorrichtung (41) zu führen, um außerhalb des Füllkopfes (23) ausgestoßen zu werden, und ein Stützelement (49) zum Aufnehmen des Magnetelements (51) umfasst, das jeder der Trennvorrichtung (41) und des Abdeckteils (32) als Positionierungselement des Magnetelements ( 51 ) dienen kann.

2. Füllkopf (23) nach dem vorhergehenden Anspruch, in welchem das Magnetelement (51) in dem Stützelement (49) befestigt ist gemäß einer Formpassung zum Ausgleich eines etwaigen Ausdehnungskoeffizientenunterschieds zwischen dem Magnetelement (51), der Trennvorrichtung (41) und dem Körper (25) des Füllkopfes (23).

3. Füllkopf (23) nach Anspruch 1 oder 2, in welchem das Stützelement (49) mindestens eine Rippe (50) aufweist, die von einer Innenwand des Stützelements (49) vorsteht, die jeweils mit einer entsprechenden Sacknut (52) zusammenwirkt in der Außenfläche des Magnetelements (51), um dessen korrekte Ausrichtung zu gewährleisten.

4. Füllkopf (23) nach dem vorhergehenden Anspruch, in welchem sich jede Bling-Nut (52) nur teilweise entlang der axialen Dicke des Magnetelements (51) erstreckt, um nur auf einer Seite des magnetischen Elements (51) eine Öffnung der Blindnut (52) zu haben.

5. Füllkopf (23) nach Anspruch 3, in welchem sich die Sacknut (52) entlang der gesamten axialen Dicke des Magnetelements (51) erstreckt, um letzteres in zwei entgegengesetzte Richtungen zu führen.

6. Füllkopf (23) nach einem der vorhergehenden Ansprüche, in welchem die Trennvorrichtung (41) ferner ein Abschirmelement (47) aufweist, das mindestens einen Teilflansch (48a) und/oder mindestens eine Querrippe (48b) umfasst, welche von der Außenfläche eines Körpers (42) der Trennvorrichtung (41) vorsteht.

7. Füllkopf (23) nach Anspruch 6, in welchem das Abschirmelement (47) das Loch (44) des Entlüftungselements (43) zumindest teilweise umgibt, um nur den Durchgang von Luft durch das Loch (44) zu ermöglichen.

8. Füllkopf (23) nach einem der vorhergehenden Ansprüche, in welchem die Trennvorrichtung (41) ferner ein Sicherungselement (45) aufweist, das mindestens einen Zapfen (46b) umfasst, der von der Innenwand des Hohlraums (35) vorsteht jede wirkt mit einer entsprechenden Nut (46a) zusammen, die an der Außenfläche eines Körpers (42) der Trennvorrichtung (41) angebracht ist.

9. Füllkopf (23) nach einem der vorhergehenden Ansprüche, in welchem das Deckelteil (32) ein im Wesentlichen ebener Teil ist.

10. Füllkopf (23) nach dem vorhergehenden Anspruch, in welchem das Deckelteil (32) ein vorstehendes Führungselement (27) aufweist, das die Aufnahme der Verteilerdüse ermöglicht.

11. Füllkopf (23) nach dem vorhergehenden Anspruch, in welchem das vorstehende Führungselement (27) durch eine Kappe dicht verschlossen ist.

12. Füllkopf (23) nach einem der vorhergehenden Ansprüche, in welchem das Deckelteil (32) durch Schweißen dicht an dem Hauptteil (31) befestigt ist.

13. Füllkopf (23) nach einem der vorangehenden 1 bis 11, in welchem der Deckelteil (32) dicht an dem Hauptteil (31) befestigt ist, indem ein Dichtungsring (53) eingerastet ist zwischen dem Deckelteil (32) und dem Hauptteil (31).

14. Speichersystem (10) aufweisend einen Harnstofftank (11), der mit einer Füllleitung (19) verbunden ist, die dazu konfiguriert ist, den Schwerkraftfluss von Fluid von einem Füllkopf (23) zu dem Harnstofftank (11) zu leiten, und eine Entlüftungsleitung (21), die konfiguriert ist zum Ausgleich de Druckschwankungen im Harnstofftank (11), **dadurch gekennzeichnet, dass** das Speichersystem (10) ferner den Füllkopf (23) nach einem der vorhergehenden Ansprüche umfasst.

## Revendications

1. Tête de remplissage (23) pour un système de stockage (10) comprenant un corps (25) avec une partie principale (31) fermée par une partie formant couvercle (32), et configurée pour recevoir un bec de distribution d'un fluide comprenant une vanne d'ouverture magnétique, et configurée pour être raccordée, de manière étanche, à une conduite de remplissage (19) et à une conduite de dégazage (21) d'un réservoir de fluide (11), la tête de remplissage (23) comprenant en outre une cavité (35) dans laquelle un dispositif de séparation (41) est reçu entre la partie principale (31) et la partie formant couvercle (32) de manière à améliorer le cloisonnement du flux (V) d'air provenant de la conduite de dégazage (21) et du flux (F) de fluide acheminé vers la conduite de remplissage (19) pendant le remplissage, et un élément magnétique (51) permettant l'activation de la vanne d'ouverture magnétique du bec de distribution, **caractérisé en ce que** le dispositif de séparation (41) comprend en outre un élément de dégazage (43) comprenant au moins un trou (44) qui permet au flux (V) d'air provenant de la conduite de dégazage (21) de traverser un corps (42) du dispositif de séparation (41) afin d'être expulsé à l'extérieur de la tête de remplissage (23), et un élément de support (49) pour recevoir l'élément magnétique (51) permettant à chacun des dispositif de séparation (41) et partie de couverture (32) d'agir comme élément de positionnement de l'élément magnétique (51).

2. Tête de remplissage (23) selon la revendication précédente, dans laquelle l'élément magnétique (51) est monté avec du jeu dans l'élément de support (49) de manière à compenser toute différence de coefficient de dilatation entre l'élément magnétique (51), le dispositif de séparation (41) et le corps (25) de la tête de remplissage (23).

3. Tête de remplissage (23) selon la revendication 1 ou 2, dans laquelle l'élément de support (49) comprend au moins une nervure (50) dépassant d'une paroi interne de l'élément de support (49) qui coopère chacune avec une rainure borgne correspondante (52) sur la surface externe de l'élément magnétique (51) de manière à assurer l'orientation correcte de ce dernier.

4. Tête de remplissage (23) selon la revendication précédente, dans laquelle chaque rainure borgne (52) ne s'étend que partiellement le long de l'épaisseur axiale de l'élément magnétique (51) de manière à n'avoir une ouverture de la rainure borgne (52) que d'un côté de l'élément magnétique (51).

5. Tête de remplissage (23) selon la revendication 3, dans laquelle la rainure borgne (52) s'étend sur toute l'épaisseur axiale de l'élément magnétique (51) de manière à guider ce dernier selon deux orientations opposées.

6. Tête de remplissage (23) selon l'une quelconque des revendications précédentes, dans laquelle le dispositif de séparation (41) comprend en outre un élément de protection (47) comprenant au moins une flasque partielle (48a) et/ou au moins une nervure transversale (48b) dépassant de la surface externe d'un corps (42) du dispositif de séparation (41).

7. Tête de remplissage (23) selon la revendication 6, dans laquelle l'élément de protection (47) entoure au moins partiellement le trou (44) de l'élément de dégazage (43) afin de ne permettre que le passage de l'air à travers le trou (44).

8. Tête de remplissage (23) selon l'une quelconque des revendications précédentes, dans laquelle le dispositif de séparation (41) comprend en outre un élément de fixation (45) comprenant au moins une mortaise (46b) montée sur la surface externe d'un corps (42) du dispositif de séparation (41) qui coopère chacune avec un tenon correspondant (46a) dépassant de la paroi interne de la cavité (35).

9. Tête de remplissage (23) selon l'une quelconque des revendications précédentes, dans laquelle la partie format couvercle (32) est une partie substantiellement plane.

10. Tête de remplissage (23) selon la revendication précédente, dans laquelle la partie formant couvercle (32) comprend un élément de guidage saillant (27) permettant de recevoir le bec de distribution.

11. Tête de remplissage (23) selon la revendication précédente, dans laquelle l'élément de guidage saillant (27) est fermé de manière étanche par un bouchon.

12. Tête de remplissage (23) selon l'une quelconque des revendications précédentes, dans laquelle la partie formant couvercle (32) est fixée à la partie principale (31) de manière serrée par soudage.

13. Tête de remplissage (23) selon l'une quelconque des dispositions précédentes 1 à 11, dans laquelle la partie formant couvercle (32) est fixée à la partie principale (31) de manière étanche par emboîtement élastique d'une bague d'étanchéité (53) entre la partie formant couvercle (32) et la partie principale (31).

14. Système de stockage (10) comprenant un réservoir d'urée (11) relié à une conduite de remplissage (19) configuré pour guider le flux gravitationnel de fluided'une tête de remplissage (23) vers le réservoir d'urée (11) et une conduite de dégazage (21) configurée pour compenser les variations de pression dans le réservoir d'urée (11), **caractérisé en ce que** le système de stockage (10) comprend en outre la tête de remplissage (23) selon l'une quelconque des revendications précédentes.
